Europäisches Patentamt

European Patent Office

Office européen des brevets

(19)

(11) Publication number: **0 277 735**
**A2**

# (12) EUROPEAN PATENT APPLICATION

(21) Application number: **88300541.5**

(22) Date of filing: **22.01.88**

(51) Int. Cl.⁴: **C08L 67/06** , **C08L 63/10** , **B63B 5/24**

(30) Priority: **04.02.87 US 11270**
**10.08.87 US 83226**

(43) Date of publication of application:
**10.08.88 Bulletin 88/32**

(84) Designated Contracting States:
**AT BE CH DE ES FR GB GR IT LI LU NL SE**

(71) Applicant: **REICHHOLD CHEMICALS, INC.**
**525 North Broadway**
**White Plains, N.Y. 10603(US)**

(72) Inventor: **Ruggerberg, Dan A.**
**10841 Knottingby Drive**
**Jacksonville Florida 32223(US)**

(74) Representative: **Austin, Hedley William et al**
**Urquhart-Dykes & Lord Alexandra House 1**
**Alexandra Road**
**Swansea West Glamorgan SA1 5ED(GB)**

(54) **Improved resin for marine applications.**

(57) A hydrolytically stable, curable, thermosetting resin composition with good surface profile characteristics comprising a mixture of an unsaturated polyester, a vinyl ester resin, and an ethylenically unsaturated liquid monomer which is copolymerizable with the unsaturated polyester and the vinyl ester resin, and useful in the fabrication of articles for marine applications.

EP 0 277 735 A2

## BACKGROUND OF THE INVENTION

### 1. FIELD OF THE INVENTION

The present invention relates to a hydrolytically stable, blister resistant resin for the marine industry, that is useful in improving the surface profile of laminated materials. The resin is a blend of an unsaturated polyester and a vinyl ester resin.

### 2. DESCRIPTION OF THE PRIOR ART

In the use of resins in the fabrication of articles for marine applications, especially in the manufacture of laminated parts for fiberglass boats, an important area of concern is making these parts sufficiently water resistant so that blister formation is avoided. This property is known as hydrolytic stability.

Most studies have focused on chemical processes occurring at the gel coat to resin interface. It is known that after extended exposure, the water molecule can penetrate the gel coated surface of a boat part, such as the hull, and cause hydrolysis of the resin in that area, resulting in localized swelling to form blisters.

While a number of other factors are also believed to contribute to blistering, such as a fabricating technique, catalyst concentration, the most important factor is resin composition. Reducing the number of unprotected ester and ether linkages in the cured product make it less susceptible to hydrolysis.

Water that penetrates the gel coat to resin interface region can attack the resin of the gel coat, the backup resin, or both.

The term "water resistant" means hydrolysis-resistant, or hydrolytically stable, not "non-water permeable". With this definition in mind, even the use of a hydrolytically stable skin coat between the gel coat and the backup laminate may afford only temporary relief. Ultimately, water can penetrate the backup laminate. Therefore, the best protection against further blistering or possible structural damage is to fabricate the vessels with a water resistant resin product.

Another important property, besides water resistance, that a suitable resin product must provide is good surface profile characteristics, which relates to the surface smoothness of a cured part.

It often occurs that in efforts to maximize water resistance, the resulting product adversely compromises the surface profile appearance. The converse is also true, whereby hydrolytic stability is compromised in favor of a smooth surface profile. Ultimately, the objective in seeking to optimize a resin for marine applications is to combine excellent water resistance and excellent surface profile characteristics. This is easier said than done, due to the fact that improvement of one property is often accomplished at the expense of the other.

U.S. Patent No. 4,480,077 to Hefner, Jr. discloses a thermosetting resin composition comprising a vinyl ester resin or mixture of vinyl ester resins blended with an ethylenically unsaturated monomer and a dicyclopentadiene or polycyclopentadiene bis or tris ester of an unsaturated polycarboxylic acid.

U.S. Patent No. 4,148,765 to Nelson, discloses resins modified with $C_{10}$ hydrocarbon concentrates using water during the reaction sequence. The resins are prepared by reacting an alpha,beta ethylenically unsaturated dicarboxylic acid or its anhydride, or a saturated polycarboxylic acid or anhydride, or mixtures, with water, a $C_{10}$ concentrate, and a polyol or an alkylene oxide.

U.S. Patent 4,167,542 to Nelson discloses a thermosetting resin composition prepared from a linear unsaturated polyester containing dicyclopentadiene and an unsaturated monomer mixture of a vinyl aromatic monomer and a dicyclopentadiene alkenoate.

U.S. Patent No. 4,189,548 to Sakashita et al, discloses a polymeric epoxy resin composition prepared from a dicyclopentadiene, or a cationically polymerizable unsaturated hydrocarbon-containing fraction, or a vinyl aromatic hydrocarbon, or a mixture of any two or three of the aforesaid components.

U.S. Patent No. 4,435,530 and U.S. Patent No. 4,496,688, both to Hefner, Jr., disclose a polyester resin composition terminated with dicyclopentadiene blended with an ethylenically unsaturated liquid monomer and a bis or tris ester of an unsaturated di-or tricarboxylic acid.

U.S. Patent No. 4,640,957 to Hefner, Jr. et al, discloses polyimido-ester compounds blended with unsaturated resins such as polyester or vinyl ester resins, and polymerizable unsaturated monomers such as styrene, to produce thermosettable resin compositions.

U.S. Patent No. 4,595,725 to Hess et al, relates to unsaturated polyester resins based on alpha, beta-unsaturated polyesters and monomers copolymerizable therewith.

## SUMMARY OF THE INVENTION

The present invention relates to a hydrolytically stable curable, thermosetting resin composition with good surface profile characteristics comprising a mixture of an unsaturated polyester, a vinyl ester resin and an ethylenically unsaturated liquid monomer which is copolymerizable with the unsaturated polyester and the vinyl ester resin.

## DISCLOSURE OF THE PREFERRED EMBODIMENTS

In accordance with the present invention, an improved thermosetting resin for marine applications that has a high degree of hydrolytic stability and has good surface profile characteristics comprises a curable mixture of an unsaturated polyester, a vinyl ester resin and an ethylenically unsaturated liquid monomer which is copolymerizable with the unsaturated polyester and the vinyl ester resin.

In general, the proportions of unsaturated polyester and vinyl ester resin can vary from about 80-20:20-80, preferably 60-40:40-60, respectively, in parts by weight.

. The unsaturated polyester resin is made from:

1) an alpha, beta-unsaturated dicarboxylic acid, anhydride thereof, or mixtures thereof. Examples include maleic and fumaric;

2) a saturated dicarboxylic acid or anhydride thereof. Examples include succinic, adipic, isophthalic, terephthalic, and orthophthalic. The amount of saturated dicarboxylic acid can vary from about 0 to 50 mole % of the total amount of unsaturated and saturated dicarboxylic acid or anhydride;

3) about 0.03 to about 1.0 mole of water per mole of unsaturated dicarboxylic acid and/or anhydride;

4) about 0.05 to about 1.2 moles of dicyclopentadiene per mole of unsaturated dicarboxylic acid and/or anhydride; and

5) an aliphatic diol equivalent in molar amount and up to 125% of the molar amount of unsaturated and/or saturated dicarboxylic acid and/or anhydride. Examples include ethylene glycol, diethylene glycol, triethylene glycol, propylene glycol, dipropylene glycol, butanediol-1,3, butanediol-1,4, cyclohexane dimethanol, propoxylated bisphenol A, and mixtures thereof.

The vinyl ester resin is made from:

1) an unsaturated monocarboxylic acid, such as methacrylic acid and acrylic acid; and

2) an epoxy resin, such as an aromatic diepoxide or polyepoxide, specifically diglycidyl ethers of diphenols, and polyglycidyl ethers of polyphenols. Preferably, the epoxy resin is diglycidyl ether of bisphenol A which can be chain extended with bisphenol A, having an epoxy equivalent weight of from about 180 to 1000, or a polyglycidyl ether of a phenol-formaldehyde novolak resin.

The resin composition has been found to be especially useful in improving the hydrolytic stability and surface profile of laminated materials used in the fabrication of articles for marine applications, such as in the manufacture of fiberglass reinforced hulls, stems, sterns, and other boat components.

In addition to the use of the resin composition in forming laminates, it can also be used in moldings or castings, and is almost always reinforced with glass cloth or glass fibers. Other fibrous reinforcing media can also be used such as aramid fiber available under the tradename Kevlar, marketed by DuPont Company. Carbon fibers can also be used as a substrate or matrix to reinforce the resin composition.

Hydrolytic stability relates to the ability of the resin composition to resist blister formation in the cured part. Blister formation is caused by hydrolysis of the resin at its ester and ether linkages.

Surface profile is a qualitative measure of the surface smoothness of the cured part. Resin compositions reinforced by fiberglass have a tendency to telescope their pattern to the surface of the composite and create a wavy or rough surface. The exact reasons for this are uncertain, but resin composition is believed to play a major role.

It has been found that the inventive resin composition can attain a smoother and cosmetically pleasing surface, which is important to the fabricator, since boats with an esthetically pleasing appearance require minimal surface refinishing.

In addition to providing superior hydrolytic stability and surface profile characteristics, the resin

3

composition provides other important user benefits. Thus, the resin composition's hardness development surpasses that of either of its component resins. Its gel drift stability and ability to attain thixotropy are also characteristics which have exceeded the expectations for such a blend.

The thermosetting resin composition is generally prepared by mixing the desired proportions of unsaturated polyester with the vinyl ester resin in the presence of an ethylenically unsaturated liquid monomer such as styrene, vinyl toluene, divinyl benzene, alkyl styrenes and monomeric acrylic esters such as methyl methacrylate which are copolymerizable with the unsaturated polyester and vinyl ester resin. The ethylenically unsaturated liquid monomer generally varies from about 10 to 90%, preferably 30 to 70%, and most preferably 40 to 60% by weight of the combined weight of the polyester resin and the vinyl ester resin. Also included are promoters in amounts sufficient to cause the reaction to go to completion to produce a sufficiently crosslinked resin, when admixed with a suitable catalyst.

Peroxide catalysts such as benzoyl peroxide, di-t-butyl peroxide, cyclohexanone peroxide, cumene hydroperoxide, t-butyl perbenzoate, t-butyl peroctoate and methyl ethyl ketone peroxide can be used. The amount of catalyst generally varies from about 0.5 to 2 parts per 100 parts of resin composition, that is, the dicyclopentadiene resin and the epoxy resin.

Amine promoters such as dimethylaniline, diethylaniline, phenyldiethanolamine, triethanolamine, dimethylparatoluidene, para-tolyl-diethanolamine and mixtures thereof, as well as cobalt octoate, copper naphthenate, and cobalt naphthenate, and mixtures thereof can be used to promote the crosslinking reaction. The amount of promoter generally varies from about 0.01 to 0.5 parts of promoter per 100 parts of resin composition.

The appropriate catalyst-promoter combination and cure conditions are a matter of choice well known to those skilled in the art. For example, a suitable combination can be methyl ethyl ketone peroxide in combination with a cobalt promoter, such as cobalt octoate or cobalt naphthenate. The inclusion of an amine promoter such as diethylaniline is optional, and a matter of choice depending upon desired cure characteristics.

In the following examples and throughout the specification, all parts and percentages are by weight, unless otherwise indicated.

Example 1

A. Preparation of Dicyclopentadiene Resin.

The dicyclopentadiene resin used as one component of the resin blend composition was prepared as follows:

| Component | Moles |
|---|---|
| Dicyclopentadiene | 1.13 |
| Water | 1.08 |
| Maleic anhydride | 1.00 |
| Ethylene glycol | 0.54 |

The dicyclopentadiene and water were charged to a suitable reaction flask equipped with stirrer and condenser. The mixture was heated under an inert gas blanket of nitrogen to 90-95°C, at which time the maleic anhydride was added slowly over a period of 2.5 hours, allowing the mixture to exotherm and cool before further incremental additions of maleic anhydride were made. Processing occurred at 125-130°C for the 2.5 hour period until the acid number dropped to 180-190. The ethylene glycol was then added and the batch was processed at 215°C to an acid number of 12.0 and a Gardner-Holt viscosity of H-I at 67% non-volatiles in inhibited styrene. The batch was then cooled to 180°C before blending with inhibited styrene and adjusted to 72% non-volatiles, with styrene comprising the remaining 28%.

B. Preparation of Vinyl Ester Resin.

The vinyl ester resin used as the second component of the resin composition blend consisted of a dimethacrylate of a bisphenol-A extended epoxy resin, available as Corrolite™ 31-345 from Reichhold Chemicals, Inc., with styrene serving as the reactive diluent, and comprising about 44 to 46 weight % of the vinyl ester resin.

Example 2 - Inventive Composition

The inventive resin blend was prepared in the following manner:

| Component | Amount (parts by weight) |
|---|---|
| resin (50:50 mixture of dicyclopentadiene resin and vinyl ester resin, including styrene prepared in accordance with Example 1) | 100 |
| 12% cobalt octoate (promoter) | 0.18 |
| dimethylaniline (promoter) | 0.15 |
| triethanolamine (promoter) | 0.05 |
| 8% copper naphthenate (promoter) | 0.007 |

The components were mixed together at ambient temperature for about 5 minutes. The material exhibited a room temperature gel time of about 19 to 23 minutes in accordance with ASTM D2471-71, after mixing in 1.25 parts by weight of a methyl ethyl ketone peroxide catalyst.

Example 3 - Hardness Development

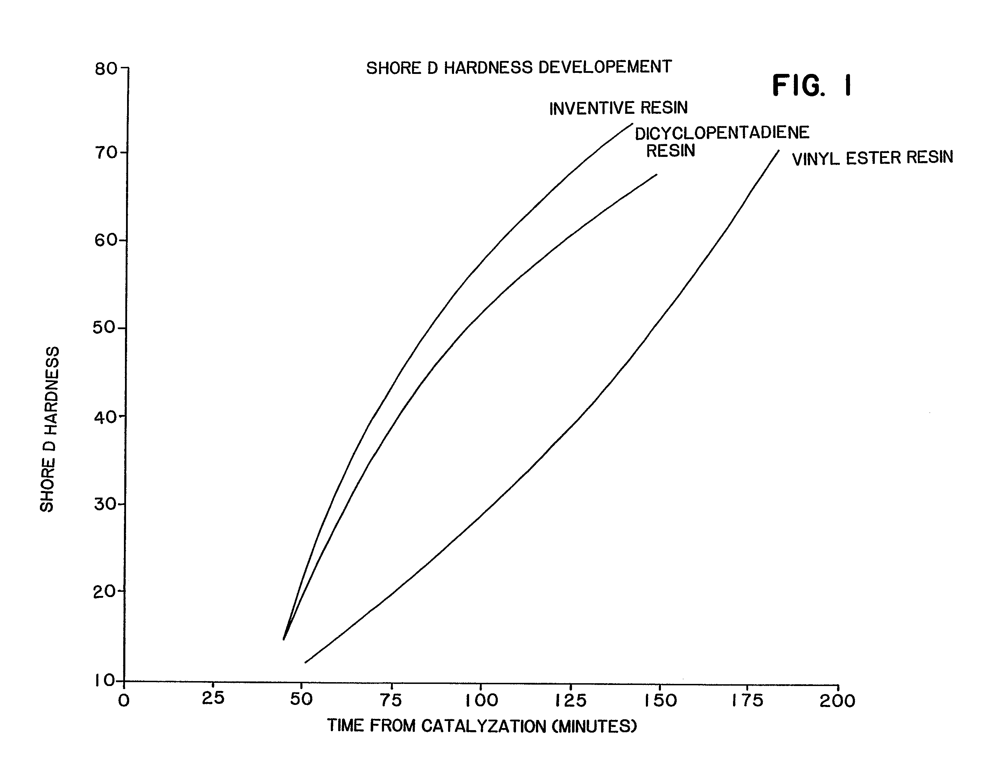

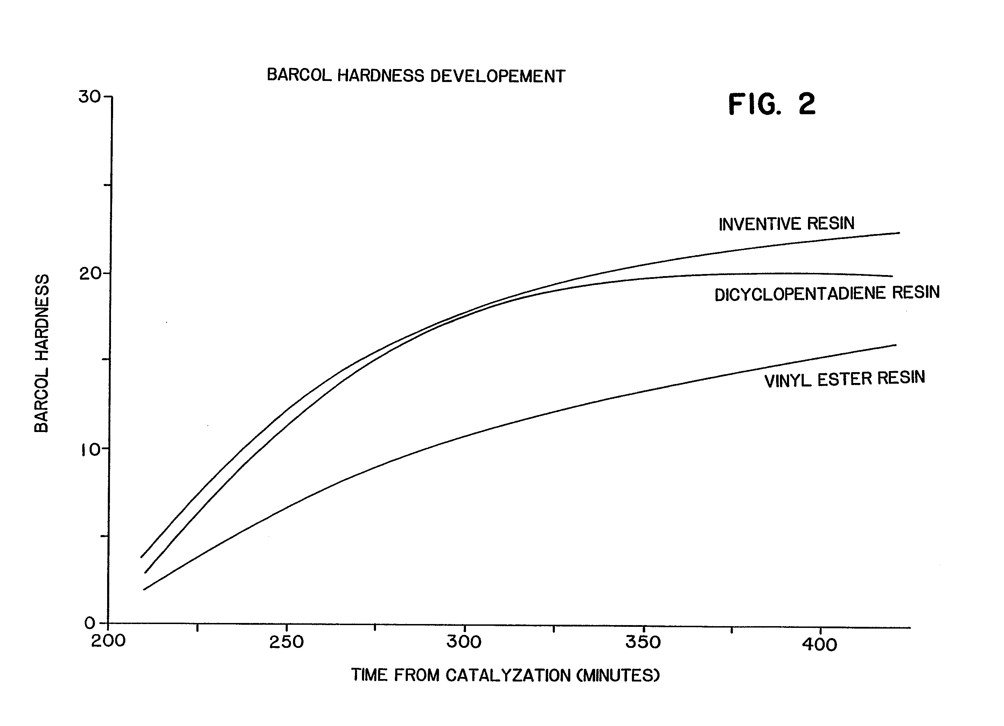

Hardness development relates to the rate at which the resin cures, and was monitored on one-eighth inch thick laminates composed of 30% fiberglass and 70% resin. Three different resins were used - the resin compositions of Examples 1A, 1B and 2. Each resin was catalyzed and promoted with the same system and amounts used in Example 2. The fiberglass used was 3 plies of 1.5 ounce chop strand mat placed on a Mylar (DuPont Co.) sheet. The resin was spread over the top of the fiberglass and allowed to wet the fibers. The mixture was rolled with a Teflon (DuPont Co.) roller until the surface was smooth. Hardness measurements began 45 minutes after catalysation. The instruments used to measure the hardness were the Shore "D" Durometer and Barcol Impressor (ASTM D2583-75). The Shore "D" Durometer was used in the early, softer stages of hardness development, and the Barcol Impressor was used for the harder advanced stages. Data for cure versus time was taken for three resins: (1) the dicyclopentadiene resin of Example 1A; (2) the methacrylated bisphenol-A extended epoxy resin of Example 1B; and (3) the inventive blend composed of 50% of the dicyclopentadiene resin and 50% of the epoxy resin of Example 2. The data for the Shore "D" Durometer is plotted in Figure 1, and Barcol Impressor data is plotted in Figure 2. As can be seen from Figures 1 and 2, the inventive resin blend showed accelerated hardness development over and above the component resins. This property is important to boat manufacturers as it reduces the length of time a part must remain in the mold, thereby increasing the production rate.

### Example 4 - Room Temperature Gel Time Drift

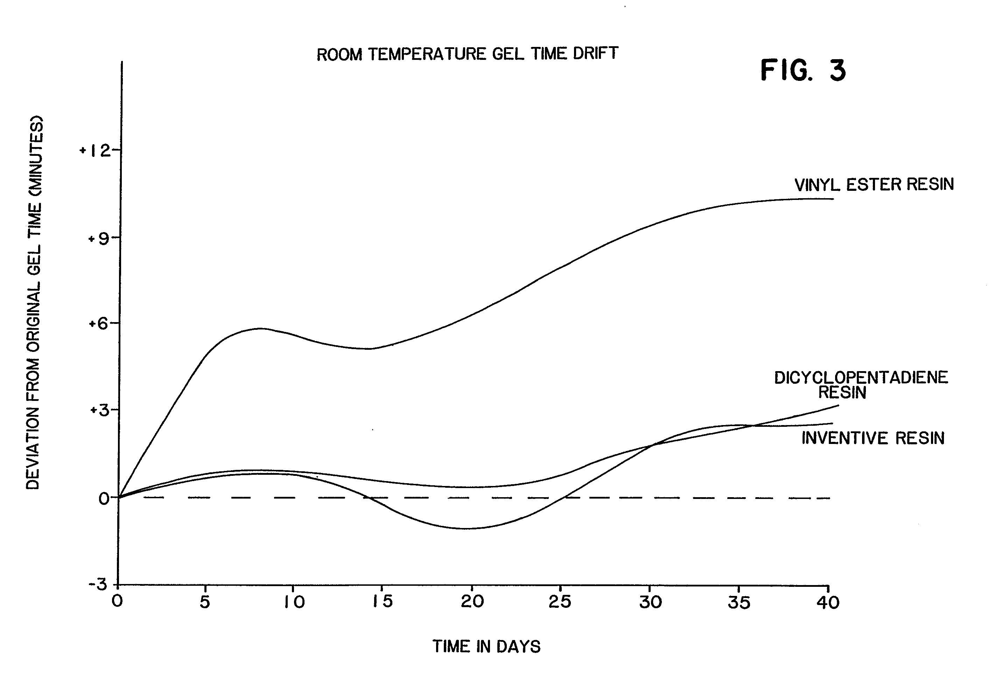

Gel time drift refers to the ability or inability of a fully promoted resin system to maintain its original gel time as adjusted at the time of manufacture (ASTM D2471-71). The absence of gel drift over time is important to the fabricator using the resin product so that there can be reliance upon consistent reactivity over periods of storage which can extend for several weeks. In Figure 3, resin gel times for the three resin formulations of Example 3 were plotted against time, in days. The test was performed on 100 gram quantities of each resin per trial. The results shown on Figure 3 demonstrate synergism between the components of the inventive resin composition inasmuch as the inventive resin's gel drift is not intermediate the component resins, but rather shows minimal gel drift for substantially the entire plot.

### Example 5 - Thixotropic Characteristics

Thixotropy refers to the ability of a material to flow as a liquid when poured or agitated, and to set as a gel when at rest. Thus, thixotropic resins are much more resistant to draining from an inclined surface than non-thixotropic resins. Thixotropy is usually imparted to a resin through the use of a fumed silica incorporated into the resin under high-shear mixing. Often, the use of a poly(oxyethylene) 20 sorbitan monolaurate "puffing" agent, such as Tween 20 (ICI Americas) aids in this process.

The measure of thixotropy is the "thix index". Thixotropy in a resin manifests itself as a difference in viscosity observed under differing shear rates, according to the following calculations:

$$A = \text{viscosity @ "X" rpm}$$

$$B = \text{viscosity @ "X/10" rpm}$$

Thix index = B/A

Thus, a non-thixotropic resin would have identical viscosity at both shear rates, and have a thix index of 1.0 The greater the thix index value, the greater the thixotropy of the resin.

100 parts by weight of each of the three resins shown in Example 3 were combined with 0.8 parts of fumed silica and 0.2 parts of Tween 20. Each resin mixture was agitated under high shear conditions of about 2500 rpm in a one gallon container agitated with a Cowles blade attached to a drill press for about 20 minutes, and the results obtained were as follows:

## Thixotropic Characteristics

| | | | | | |
|---|---|---|---|---|---|
| Dicyclopentadiene resin (parts) | 100 | 80 | 50 | 20 | 0 |
| Vinyl ester resin (parts) | 0 | 20 | 50 | 80 | 100 |
| Brookfield LVT spindle #3@ 60 rpm,cps | 590 | 580 | 560 | 510 | 535 |
| "       "       "    #3@ 6 rpm,cps | 1710 | 1970 | 1905 | 1905 | 750 |
| Thix Index | 2.9 | 3.4 | 3.4 | 2.5 | 1.4 |

Vinyl ester resins are notorious for their inability to become thixed with the use of fumed silica at low levels. However, with the admixture of as little as 20% of the dicyclopentadiene resin, the combination unexpectedly exhibits acceptable thixotropy, which is not a linear relationship between the thix indices of the parent resin.

## Example 6 - Hydrolytic Stability

"Hydrolytic stability" is the ability of the cured resin to resist hydrolysis. This is generally measured in terms of blister resistance by means of accelerated testing procedures. Resin composition is the most important factor influencing hydrolytic stability. A series of four different test resins were prepared as follows:

### a) Inventive Resin

The inventive resin was a 50:50 mixture of the dicyclopentadiene resin and the vinyl ester resin of Example 2 with the same promoter recipe. 100 parts of the resin were then thixed by being combined with 0.8 parts of fumed silica and 0.2 parts of Tween 20 in a one gallon container, and agitated with a Cowles blade attached to a drill press under high shear conditions of about 2500 rpm for about 20 minutes.

### b) Isophthalic Base Resin

To a round bottomed reaction flask of two liter capacity, equipped with a stirrer, nitrogen source, thermometer and reflux condenser were charged 10.7 moles of propylene glycol and 5.0 moles of isophthalic acid (813 grams and 580 grams respectively). The mixture was heated under agitation and a nitrogen blanket to a temperature of 210°C. The mixture was allowed to cook until an acid number of less than 20.0 at 100% solids was reached. The mixture was then cooled to 160°F and 5.0 moles (490 grams) of maleic anhydride were added. The mixture was heated to 220°C and processed to an acid number (solution basis) of 9-15, and a Gardner-Holdt viscosity of Q-R at 57% non volatiles in inhibited styrene. The resin was cooled to 190°C at which time it was blended, under cooling, with 1014 grams of styrene containing 0.002% of para-benzoquinone and 0.005% of hydroquinone. 100 parts of the cooled resin were then promoted and thixed with the same recipe and procedure as in "a)".

### c) Orthophthalic Resin

To a round bottomed reaction flask of three liter capacity, equipped with a stirrer, nitrogen source, thermometer and reflux condenser were charged 6.9 moles (524 grams) of propylene glycol, 1.13 moles (120 grams) of diethylene glycol, 2.56 moles (158 grams) of ethylene glycol, 6.69 moles (990 grams) of phthalic anhydride and 3.31 moles (324 grams) of maleic anhydride. The mixture was slowly heated to allow for exotherm to occur and then subside. Then it was heated again to 220°C and processed to an acid number of 18-24 and a Gardner-Holdt viscosity of S-T @ 67% non-volatiles in inhibited styrene. The resin was cooled to 190°C before blending, blending under cooling, with styrene containing 0.0015% parabenzoquinone and 0.002% hydroquinone. 100 parts of the cooled resin were then promoted and thixed with the same recipe and procedure as in "a)".

### d) Vinyl Ester Resin

To a three-liter round bottomed flask equipped with a stirrer, nitrogen source, thermometer and reflux condenser were charged 454 grams of Epotuf® 37-140 (epoxy resin of 180-195 Epoxide Equivalent weight - Reichhold Chemicals, Inc.) and 670 grams of Epotuf® 37-304 (epoxy of 875-1025 Epoxide Equivalent weight - Reichhold Chemicals, Inc.). The mixture was heated to 95°C under agitation and a nitrogen blanket to effect a homogeneous solution. After one hour, the EEW was checked by titration and found to be 380. The amount of glacial methacrylic acid to be used was calculated from:

$$\frac{[\ (wgt\ of\ Epotuf^{\bullet}\ 37\text{-}140)\ +\ (wgt\ of\ Epotuf^{\bullet}\ 37\text{-}304)\ ]\ 86}{EEW}$$

Therefore it was determined to add 254 grams of glacial methacrylic acid. The mixture was cooled to 80°C before the mixture in the flask was removed from the nitrogen blanket and exposed to an air blanket before addition of the glacial methacrylic acid. Then 4.4 grams of tetramethyl ammonium chloride was added in three equal charges, the resultant exotherm being allowed to subside prior to the subsequent addition of the tetramethyl ammonium chloride catalyst. The mixture was then processed at 80°C to an acid number (solids basis) of less than 12.0. The resin was then blended, under cooling, into 1125 grams of styrene containing 0.005% toluhydroquinone. The resin product was cooled to room temperature and then 100 parts were promoted and thixed with the same recipe and procedure as in "a)".

Castings were then made of each resin in the following manner:

Two 12 inch × 12 inch glass plates were cleaned and treated with a silicone release agent. A piece of latex tubing was placed upon one of the treated plates and formed into a "U" shape. Behind each side of the "U" was placed a 1/8" thick piece of metal bar stock. The bar acted as the shim to control thickness, and the tubing formed the pocket into which the resin was to be poured. The second glass plate was placed atop the tube and shims lying on the first plate. The glass plates were then clamped together to form a pocket between the glass plates spaced 1/8 inch apart. Each of the subject resins was then catalyzed with 1.25% of a methyl ethyl ketone peroxide catalyst (9% active oxygen) by mixing with a glass stirring rod. The resin was evacuated in a vacuum chamber to remove air bubbles before being poured between the glass plates. The resin was allowed to cure between the plates at room temperature overnight. The cured "clear-casting" of each resin was removed from the mold and postcured for 4 hours at 150°F. Upon completion of the postcure and subsequent slow cooling to ambient temperature, each resin casting was cut into 2 inch by 5 inch coupons which were vertically suspended in boiling, distilled water for a period of 100 hours.

Testing in this manner allowed for judgment of hydrolytic stability based solely on resin composition, eliminating the fabricating variable, such as type of fiberglass or other reinforcing media, laminating technique, and the like, that exist in reinforced systems.

Each coupon was then visually examined and rated for frequency of cracking and blistering as follows:

|  | Inventive Resin | Isophthalic | Orthophthalic | Vinyl Ester |
|---|---|---|---|---|
| Blistering | none | slight | severe | none |
| Cracking | none | slight | severe | none |

Neither the inventive resin, nor the vinyl resin showed signs of blistering or cracking after the exposure period. The isophthalic resin exhibited minor surface blistering and slight internal cracking called "glinting". The orthophthalic resin was so severely attacked as to be totally opaque with extensive internal and surface cracking and blistering. All resins became somewhat cloudy, but this effect has not been related to any category of performance.

Example 7 - Profile Characteristics

The resin profile refers to the surface smoothness of a cured part, such as one made of a reinforced plastic composite. Fiberglass reinforced plastic composites have a tendency to "telescope" their patterns up through the composite to the surface, creating a rough and undesirable appearance. This process is accelerated upon post-curing with heat and/or ultraviolet light. As with hydrolytic stability, resin composition is a major factor in controlling surface profile appearance.

Resin profile is a critical property for boat manufacturers. Unlike other resin properties, the surface quality that a fabricator achieves is not usually immediately apparent upon demolding of the hull or other part. Only after a period of exposure to the heat and sunlight can the resin profile be finally evaluated. A poor profile can mean loss of sales and/or costly repairs. In order to compare the surface smoothness of panels made with the four test resins of Example 6, the following procedure was used:

A 25 mil thick black iso-neopentyl glycol (Cook Paint & Varnish Co.) gel-coat layer was applied to a 12 inch by 12 inch glass plate and cured overnight at room temperature with 1.75 weight % methyl ethyl ketone peroxide catalyst. Six inch by twelve inch laminates were applied over the cured gel coat in accordance with the following fiberglass schedule (40/60 fiberglass-resin ratio):

(a) 3 plies 1.5 ounce chopped strand mat

(b) 1 ply 24 ounce woven roving

(c) 1 ply 1.5 ounce chopped strand mat

(d) 1 ply 24 ounce woven roving All laminates were cured at 77°F for three days, and were placed on an outdoor rack at a 45° angle to the horizon facing south into the Florida sun, in July, for a one-week period. During the outdoor exposure, the average daily high temperature was 93°F. Black gel-coated panels thus exposed were reached surface temperatures in excess of 150°F.

Each panel was then subjectively evaluated with the aid of a special lightbox commonly used to judge surface smoothness on press-molded automotive test panels, patterned after the General Motors AES (Advanced Engineering Staff) Grid, Dwg # XP-1083, September 1, 1981. The lightbox consisted of a bank of fluorescent lights mounted at the rear of a shallow wooden box whose face was covered by a glass plate. The outward face of the plate was cross hatched with a series of parallel, vertical and horizontal lines spaced one inch apart. When the light bank was turned on, the grid pattern of the glass plate was allowed to reflect from the surface of the panel. The surface profile was then subjectively judged by the sharpness of the reflected grid pattern. A panel of excellent profile would produce a reflection approaching that of a mirror image of the grid while one of poor profile would reflect a wavy or mottled image.

Panels made with the isophthalic and orthophthalic resins showed considerable pattern transfer of the woven roving at the surface, with the orthophthalic resin being the worst. The vinyl ester resin panel showed a very mottled surface, representing a poor profile. The inventive resin blend composition had a very good profile as the reflected image from the light box remained relatively undistorted when compared to the control.

## Claims

1. A hydrolytically stable thermosetting resin composition with good surface profile characteristics, comprising a blend of:

(a) an unsaturated polyester resin;

(b) a vinyl ester resin;

(c) an ethylenically unsaturated liquid monomer which is copolymerizable with (a) and (b); and wherein the proportions of (a) to (b) vary from about 80-20:20-80, respectively, in parts by weight, and (c) varies from about 10% to 90% by weight of (a) + (b).

2. The composition of claim 1, wherein the unsaturated polyester comprises the reaction product of:

(i) an alpha beta unsaturated dicarboxylic acid, anhydride, or mixture thereof;

(ii) a saturated dicarboxylic acid, anhydride, or mixture thereof;

(iii) about 0.03 to 1.0 mole of water per mole of (i);

(iv) about 0.05 to 1.2 moles of dicyclopentadiene per mole of (i); and

(v) an aliphatic diol.

3. The composition of claim 1, wherein the vinyl ester resin is the reaction product of an unsaturated monocarboxylic acid and an aromatic diepoxide or polyepoxide.

4. The composition of claim 2, wherein the ethylenically unsaturated liquid monomer is selected from the group consisting of styrene, vinyl toluene, divinyl benzene, alkyl styrenes, monomeric acrylic esters, and mixtures thereof.

5. The composition of claim 1, also including a woven or unwoven fabric as a substrate or matrix.

6. The composition of claim 1, also including glass fibers in a glass fiber to resin composition ratio of about 25-45:75-55, respectively.

7. A process for making a hydrolytically stable, thermosetting resin composition with good surface profile characteristics, comprising:

contacting

(a) an unsaturated polyester resin;

(b) a vinyl ester resin; and

(c) an ethylenically unsaturated liquid monomer which is copolymerizable with (a) and (b); wherein the proportions of (a) to (b) vary from about 80-20:20-80, respectively, in parts by weight, and (c) varies from about 10% to 90% by weight of (a) + (b).

8. The process of claim 7, wherein the vinyl ester resin is the reaction product of an unsaturated monocarboxylic acid and an aromatic diepoxide or polyepoxide.

9. A method for improving the hydrolytic stability and surface profile of laminated materials used in the fabrication of articles for marine applications, comprising utilizing in said laminated materials a sufficient amount of a resin composition comprising a mixture of

    (a) an unsaturated polyester resin;

    (b) a vinyl ester resin; and

    (c) an ethylenically unsaturated liquid monomer which is copolymerizable with (a) and (b); wherein the proportions of (a) to (b) vary from about 80-20:20-80, respectively, in parts by weight, and (c) varies from about 10% to 90% by weight of (a) + (b).

10. The method of claim 9, wherein said laminated materials are reinforced with glass fibers.

SHORE D HARDNESS DEVELOPEMENT

FIG. I

INVENTIVE RESIN

DICYCLOPENTADIENE RESIN

VINYL ESTER RESIN

SHORE D HARDNESS

TIME FROM CATALYZATION (MINUTES)

0 277 735

BARCOL HARDNESS DEVELOPEMENT

FIG. 2

INVENTIVE RESIN

DICYCLOPENTADIENE RESIN

VINYL ESTER RESIN

BARCOL HARDNESS

TIME FROM CATALYZATION (MINUTES)

0 277 735

ROOM TEMPERATURE GEL TIME DRIFT

FIG. 3

VINYL ESTER RESIN

DICYCLOPENTADIENE RESIN

INVENTIVE RESIN

DEVIATION FROM ORIGINAL GEL TIME (MINUTES)

TIME IN DAYS

0 277 735